# EUROPEAN PATENT SPECIFICATION

(11) **EP 3 652 582 B1**
(45) Date of publication and mention of the grant of the patent: **02.12.2026**
(21) Application number: 18792706.6
(22) Date of filing: 01.10.2018
(51) Int. Cl.: G02B 27/01

(54) **HEAD-WORN AUGMENTED REALITY DISPLAY**
KOPFGETRAGENE ANZEIGE DER ERWEITERTEN REALITÄT
DISPOSITIF D'AFFICHAGE À RÉALITÉ AUGMENTÉE PORTÉ SUR LA TÊTE

(30) Priority: 29.09.2017 US 201762566182 P
(43) Date of publication of application: 20.05.2020
(73) Proprietor: Google LLC, Mountain View, CA 94043 (US)
(72) Inventor: CAKMAKCI, Ozan, Mountain View, California 94043 (US)
(74) Representative: Maikowski & Ninnemann Patentanwälte Partnerschaft mbB
(86) International application number: PCT/US2018/053762
(87) International publication number: WO 2019/068090

(56) References cited:
- EP-A1- 0 722 109
- EP-B1- 0 669 011
- FR-A1- 3 028 325
- US-A- 5 044 706
- US-A- 5 162 828
- US-B2- 7 515 345

## Description

### CROSS REFERENCE TO RELATED APPLICATION

This application claims priority to U.S. Application No. 62/566,182, filed September 29, 2017.

### BACKGROUND

An augmented reality (AR) system, such as discloses in EP 0 669 011 B1, EP 0 722 109 A1 or US 5,162,828 A, can generate an immersive augmented environment for a user. The immersive augmented environment can be generated by superimposing computer-generated content on a user's field of view of the real world. For example, the computer-generated content can include labels, textual information, images, sprites, and three-dimensional entities.

These images may be displayed at a position in the user's field of view so as to appear to overlay an object in the real world. An AR system may include a head-mounted display (HMD) that can overlay the computer-generated images on the user's field of view.

### SUMMARY

The proposed solution relates to a head-mounted display device of claim 1, in particular to a head-worn augmented reality display.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram illustrating a system according to an example implementation.
FIG. 2 is a third person view of an example physical space, in which a user is experiencing an AR environment through an example HMD, in accordance with implementations as described herein.
FIG. 3 is a schematic diagram of an example HMD, in accordance with implementations as described herein.
FIGS. 4A and 4B are schematic diagrams of an example HMD, in accordance with implementations as described herein.
FIG. 5 is a schematic diagram of a portion of an example HMD, in accordance with implementations as described herein.
FIG. 6 is another schematic diagram of a portion of the example HMD, in accordance with implementations as described herein.
FIG. 7 is a schematic diagram of a portion of an example HMD, in accordance with implementations as described herein.
FIGS. 8A and 8B show a schematic diagram of another example implementation of an HMD being worn over glasses by a user, in accordance with implementations as described herein.
FIGS. 9A-9D show a schematic diagram of another example implementation of an HMD being worn by a user, in accordance with implementations as described herein.
FIG. 10 is a schematic diagram of a portion of an example HMD, in accordance with implementations as described herein.
FIG. 11 shows an example of a computing device and a mobile computing device that can be used to implement the techniques described herein.

### DETAILED DESCRIPTION

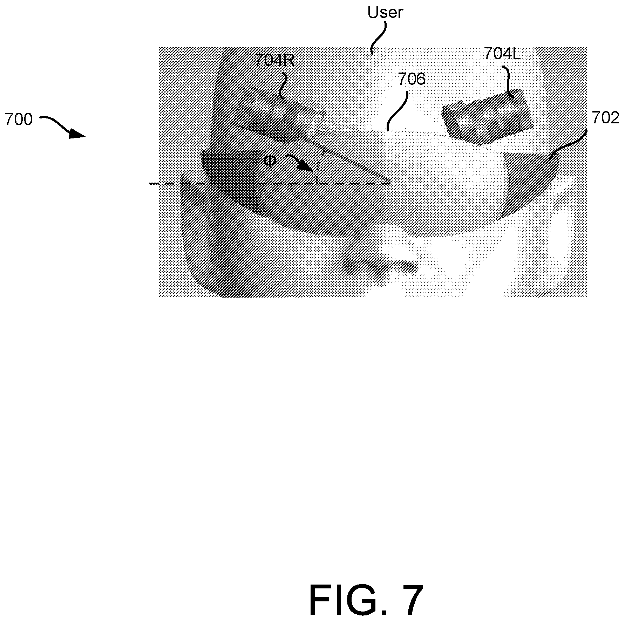

Reference will now be made in detail to non-limiting examples of this disclosure, examples of which are illustrated in the accompanying drawings, wherein Figure 7 shows an embodiment of a claimed head-mounted display device. The examples are described below by referring to the drawings, wherein like reference numerals refer to like elements. When like reference numerals are shown, corresponding description(s) are not repeated and the interested reader is referred to the previously discussed figure(s) for a description of the like element(s).

At least some implementations of AR systems include a head-mounted display device (HMD) that can be worn by a user. The HMD may display images that cover a portion of a user's field of view. Some implementations of an HMD include a frame that can be worn by the user, a microdisplay device that can generate visual content, and a combiner that overlays the visual content generated by the microdisplay device on the user's field of view of the physical environment. In this manner, the visual content generated by the microdisplay augments the reality of the user's physical environment.

In some implementations, the HMD also includes a lens assembly that forms an intermediary image from or otherwise alters light beams of the visual content generated by the microdisplay device. Implementations of the HMD may also include a fold mirror to reflect or redirect light beams associated with the visual content generated by the microdisplay device.

The HMD may be configured to overlay computer-generated visual content over the field of view of one or both of the user's eyes. In at least some embodiments, the HMD includes a first microdisplay device that is disposed on a first side of the user's head (e.g., the left side) and is configured to overlay computer-generated visual content over the field of view of the eye on the opposite side (e.g., the right eye) when the HMD is worn. The HMD may also include a second microdisplay device the is disposed on the second side of the user's head (e.g., the right side) and is configured to overlay computer-generated visual content over the field of view of the eye on the opposite side (e.g., the left eye) when the HMD is worn.

For example, the placement of a microdisplay device on the side of the user's head opposite to the eye upon which the microdisplay overlays content may allow the HMD to be formed with a positive wrap angle combiner. A positive wrap angle combiner may allow for a more aesthetic HMD. For example, the HMD may have a visor-like style in which the front of the HMD has a single smooth convex curvature. For example, having an HMD having a smooth curvature includes an HMD having a curvature with a continuous first derivative. The combiner may have an outer surface that is opposite the reflective surface (e.g., on the opposite side of a thin plastic structure). An HMD having a convex curvature includes an HMD having an outer surface with a convex curvature. A positive wrap angle for the combiner may, for example, be understood as the combiner generally wrapping around the front of the user's head or face, or having a center of curvature generally located towards rather than away from the user's head. In some implementations, the center of curvature for all or substantially all segments of the combiner is located towards rather than away from the user's head.

In some implementations, the positive wrap angle visor includes two separate regions (i.e., not having a continuous curvature) of the combiner that meet at an angle that is less than 180 degrees in front of the user's nose (i.e., both regions are angled/tilted in towards the user's temples). For example, a positive wrap angle visor may not have any indents or concave regions in front of the user's eyes when viewed from in front of the user (e.g., the outer surface of the combiner does not have any indents or concavities). In some implementations, a positive wrap angle visor includes a combiner having a midpoint that when worn by a user is more anterior than any other part of the combiner. In contrast, an HMD with a negative-wrap angle combiner may have a bug eyed shape in which the HMD bulges out separately in front of each of the user's eyes. For example, a negative-wrap angle combiner may have one or more indents or concave regions on the combiner, such as a concave region disposed on the combiner at a location that would be in front of a midpoint between a user's eyes when the HMD is being worn.

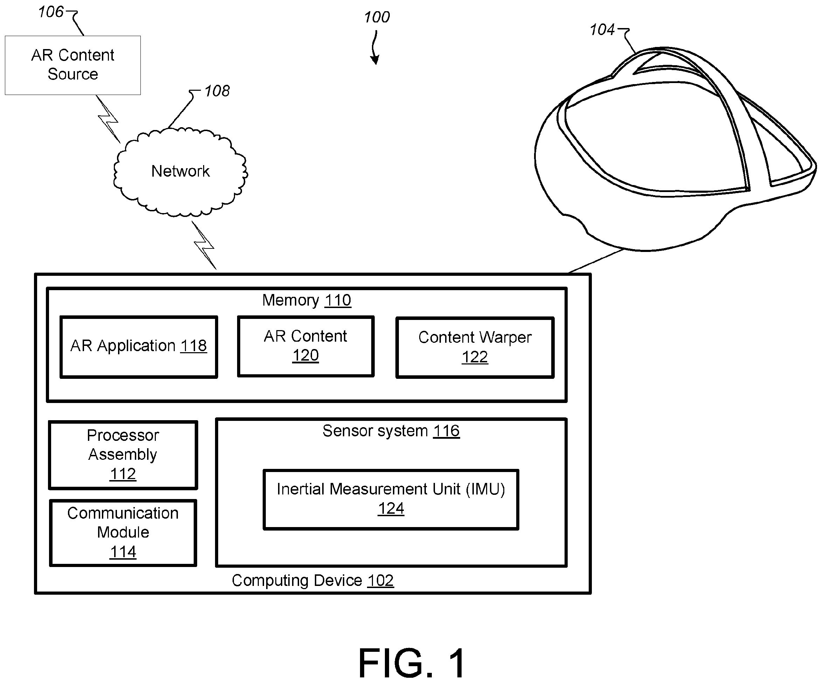

FIG. 1 is a block diagram illustrating a system 100 according to an example implementation. The system 100 generates an augmented reality (AR) environment for a user of the system 100. In some implementations, the system 100 includes a computing device 102, a head-mounted display device (HMD) 104, and an AR content source 106. Also shown is a network 108 over which the computing device 102 may communicate with the AR content source 106.

The computing device 102 may include a memory 110, a processor assembly 112, a communication module 114, and a sensor system 116. The memory 110 may include an AR application 118, AR content 120, and a content warper 122. The computing device 102 may also include various user input components (not shown) such as a controller that communicates with the computing device 102 using a wireless communications protocol. In some implementations, the computing device 102 is a mobile device (e.g., a smart phone) which may be configured to provide or output AR content to a user via the HMD 104. For example, the computing device 102 and the HMD 104 may communicate via a wired connection (e.g., a Universal Serial Bus (USB) cable) or via a wireless communication protocol (e.g., any WiFi protocol, any BlueTooth protocol, Zigbee, etc.). Additionally or alternatively, the computing device 102 is a component of the HMD 104 and may be contained within a housing of the HMD 104 or included with the HMD 104.

The memory 110 can include one or more non-transitory computer-readable storage media. The memory 110 may store instructions and data that are usable to generate an AR environment for a user.

The processor assembly 112 includes one or more devices that are capable of executing instructions, such as instructions stored by the memory 110, to perform various tasks associated with generating an AR environment. For example, the processor assembly 112 may include a central processing unit (CPU) and/or a graphics processing unit (GPU). For example, if a GPU is present, some image/video rendering tasks may be offloaded from the CPU to the GPU.

The communication module 114 includes one or more devices for communicating with other computing devices, such as the AR content source 106. The communication module 114 may communicate via wireless or wired networks, such as the network 108.

The sensor system 116 may include various sensors, such as an inertial motion unit (IMU) 124. Implementations of the sensor system 116 may also include different types of sensors, including, for example, a light sensor, an audio sensor, an image sensor, a distance and/or proximity sensor, a contact sensor such as a capacitive sensor, a timer, and/or other sensors and/or different combination(s) of sensors. In some implementations, the AR application may use the sensor system 116 to determine a location and orientation of a user within a physical environment and/or to recognize features or objects within the physical environments.

The IMU 124 detects motion, movement, and/or acceleration of the computing device 102 and/or the HMD 104. The IMU 124 may include various different types of sensors such as, for example, an accelerometer, a gyroscope, a magnetometer, and other such sensors. A position and orientation of the HMD 104 may be detected and tracked based on data provided by the sensors included in the IMU 124. The detected position and orientation of the HMD 104 may allow the system to detect and track the user's gaze direction and head movement.

The AR application 118 may present or provide the AR content to a user via the HMD and/or one or more output devices of the computing device 102 such as a display device, a speaker, and/or other output devices. In some implementations, the AR application 118 includes instructions stored in the memory 110 that, when executed by the processor assembly 112, cause the processor assembly 112 to perform the operations described herein. For example, the AR application 118 may generate and present an AR environment to the user based on, for example, AR content, such as the AR content 120 and/or AR content received from the AR content source 106. The AR content 120 may include content such as images or videos that may be displayed on a portion of the user's field of view in the HMD 104. For example, the content may include annotations of objects and structures of the physical environment in which the user is located. The content may also include objects that overlay various portions of the physical environment. The content may be rendered as flat images or as three-dimensional (3D) objects. The 3D objects may include one or more objects represented as polygonal meshes. The polygonal meshes may be associated with various surface textures, such as colors and images. The AR content 120 may also include other information such as, for example, light sources that are used in rendering the 3D objects.

The AR application 118 may use the content warper 122 to generate images for display via the HMD 104 based on the AR content 120. In some implementations, the content warper 122 includes instructions stored in the memory 110 that, when executed by the processor assembly 112, cause the processor assembly 112 to warp an image or series of images prior to being displayed via the HMD 104. For example, the content warper 122 may warp images that are transmitted to the HMD 104 for display so as to counteract a warping caused by a lens assembly of the HMD 104. In some implementations, the content warper corrects a specific aberration, namely distortion, which changes the shape of the image but does not blur the images.

The AR application 118 may update the AR environment based on input received from the IMU 124 and/or other components of the sensor system 116. For example, the IMU 124 may detect motion, movement, and/or acceleration of the computing device 102 and/or the HMD 104. The IMU 124 may include various different types of sensors such as, for example, an accelerometer, a gyroscope, a magnetometer, and other such sensors. A position and orientation of the HMD 104 may be detected and tracked based on data provided by the sensors included in the IMU 124. The detected position and orientation of the HMD 104 may allow the system to in turn, detect and track the user's position and orientation within a physical environment. Based on the detected position and orientation, the AR application 118 may update the AR environment to reflect a changed orientation and/or position of the user within the environment.

Although the computing device 102 and the HMD 104 are shown as separate devices in FIG. 1, in some implementations, the computing device 102 may include the HMD 104. In some implementations, the computing device 102 communicates with the HMD 104 via a cable, as shown in FIG. 1. For example, the computing device 102 may transmit video signals and/or audio signals to the HMD 104 for display for the user, and the HMD 104 may transmit motion, position, and/or orientation information to the computing device 102.

The AR content source 106 may generate and output AR content, which may be distributed or sent to one or more computing devices, such as the computing device 102, via the network 108. In an example implementation, the AR content includes three-dimensional scenes and/or images. The three-dimensional scenes may incorporate physical entities from the environment surrounding the HMD 104. Additionally, the AR content may include audio/video signals that are streamed or distributed to one or more computing devices. The AR content may also include an AR application that runs on the computing device 102 to generate 3D scenes, audio signals, and/or video signals.

The network 108 may be the Internet, a local area network (LAN), a wireless local area network (WLAN), and/or any other network. A computing device 102, for example, may receive the audio/video signals, which may be provided as part of AR content in an illustrative example implementation, via the network.

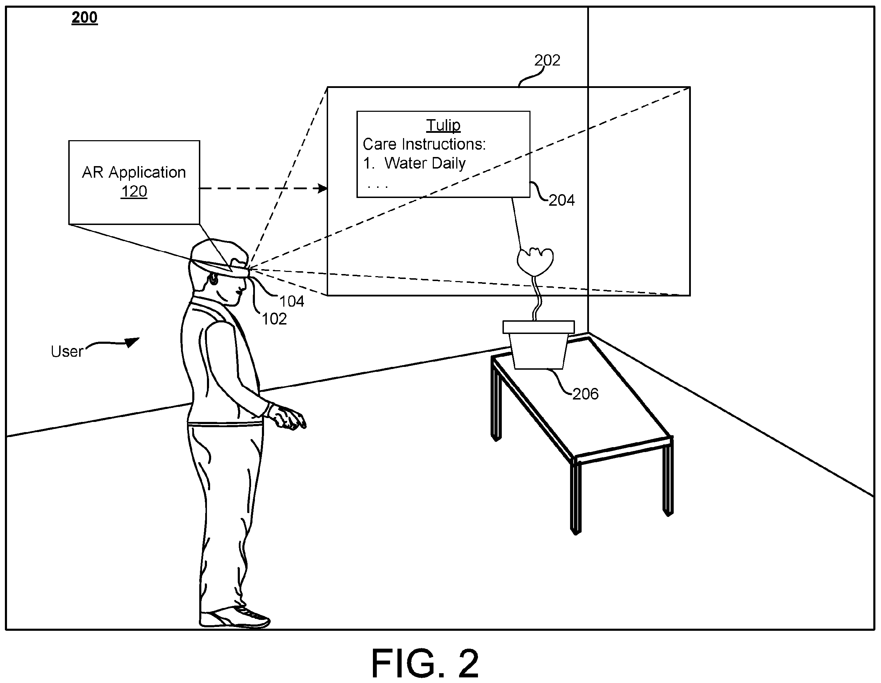

FIG. 2 is a third person view of an example physical space 200, in which a user is experiencing an AR environment 202 through the example HMD 104. The AR environment 202 is generated by the AR application 118 of the computing device 102 and displayed to the user through the HMD 104.

The AR environment 202 includes an annotation 204 that is displayed in association with an entity 206 in the physical space 200. In this example, the entity 206 is a flower in a pot and the annotation 204 identifies the flower and provides care instructions. The annotation 204 is displayed on the user's field of view by the HMD 104 so as to overlay the user's view of the physical space 200. For example, portions of the HMD 104 may be transparent, and the user may be able to see the physical space 200 through those portions while the HMD 104 is being worn.

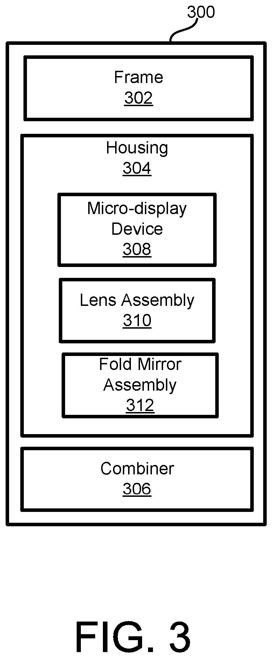

FIG. 3 is a schematic diagram of an example HMD 300. The HMD 300 is an example of the HMD 104 of FIG. 1. In some implementations, the HMD 300 includes a frame 302, a housing 304, and a combiner 306.

The frame 302 is a physical component that is configured to be worn by the user. For example, the frame 302 may be similar to a glasses frame. For example, the frame 302 may include arms with ear pieces and a bridge with nose pieces.

The housing 304 is attached to the frame 302 and may include a chamber that contains components of the HMD 300. The housing 304 may be formed from a rigid material such as a plastic or metal. In some implementations, the housing 304 is positioned on the frame 302 so as to be adjacent to a side of the user's head when the HMD 300 is worn. In some implementations, the frame 302 includes two housings such that one housing is positioned on each side of the user's head when the HMD 300 is worn. For example, a first housing may be disposed on the left arm of the frame 302 and configured to generate images that overlay the field of view of the user's right eye and a second housing may be disposed on the right arm of the frame 302 and configured to generate images that overlay the field of view of the user's left eye.

The housing 304 may contain a microdisplay device 308, a lens assembly 310, and a fold mirror assembly 312.The microdisplay device 308 is an electronic device that displays images. The microdisplay device 308 may include various microdisplay technologies such as Liquid Crystal Display (LCD) technology, including Liquid Crystal on Silicon (LCOS), Ferroelectric Liquid Crystal (FLCoS), Light Emitting Diode (LED) technology, and/or Organic Light Emitting Diode (OLED) technology.

The lens assembly 310 is positioned in front of the microdisplay device 308 and forms an intermediary image between the lens assembly 310 and combiner 306 from the light emitted by the microdisplay device 308 when the microdisplay device 308 displays images. The lens assembly 310 may include one or more field lenses. For example, the lens assembly 310 may include four field lenses. In some implementations, the field lenses are oriented along a common optical axis. In other implementations, at least one of the field lenses is oriented along a different optical axis than the other field lenses. The lens assembly 310 may distort the images generated by the microdisplay device 308 (e.g., by altering light of different colors in different ways). In some implementations, the images displayed by the microdisplay device 308 are warped (e.g., by the content warper 122) to counteract the expected alterations caused by the lens assembly 310.

Some implementations include a fold mirror assembly 312. The fold mirror assembly 312 may reflect the light emitted by the microdisplay device 308. For example, the fold mirror assembly 312 may reflect light that has passed through the lens assembly 310 by approximately 90 degrees. For example, when the HMD 300 is worn by a user, the light emitted by the microdisplay device 308 may initially travel along a first side of the user's head toward the front of the user's head, where the light is then reflected 90 degrees by the fold mirror assembly 312 to travel across and in front of the user's face towards a portion of the combiner 306 disposed in front of the user's opposite eye.

The combiner 306 is a physical structure that allows the user to view a combination of the physical environment and the images displayed by the microdisplay device 308. For example, the combiner 306 may include a curved transparent structure that includes a reflective coating. The curved transparent structure may be formed from a plastic or another material. The reflective coating may reflect the light emitted by the microdisplay device 308 and reflected by the fold mirror assembly 312 toward the user's eye over the user's field of view of the physical environment through the combiner 306. The reflective coating may be configured to transmit light from the physical environment (e.g., behind the combiner 306). For example, a user may be able to look through the reflective coating to see the physical environment. In some implementations, the reflective coating is transparent when light is not directed at the coating (e.g., light from the microdisplay device 308) or allows light to pass through even when light is being reflected. In this manner, the combiner 306 will combine the reflected light from the display with the transmitted light from the physical environment (i.e., the real world) to, for example, generate a combined image that is perceived by at least one of a wearer's eyes). In some implementations, the combiner 306 may have a smooth, curved structure that is free of inflection points and extrema.

In some implementations, when the HMD 300 is worn, the combiner 306 reflects light emitted by a microdisplay device 308 located on one side of a person's face into the field of an eye on the other side of the person's face. For example, the light (or image content) emitted by the microdisplay device 308 may cross in front of the user's face before reflecting off of the combiner 306 toward the user's eye. As an example, crossing in front of the user's face may include crossing the sagittal plane of the user's face. The sagittal plane is an imaginary vertical plane that divides a person into a left half and a right half. The sagittal plane of a user's face runs between the user's eyes.

Although this example HMD 300 includes a fold mirror assembly 312, some implementations of the HMD 300 do not include a fold mirror assembly. For example, the microdisplay device 308 may be disposed so as to emit light that travels in front of and across the user's face and contacts the combiner 306 (after passing through the lens assembly 310).

In some implementations, the HMD 300 may include additional components that are not shown in FIG. 3. For example, the HMD 300 may include an audio output device including, for example, speakers mounted in headphones, that are coupled to the frame 302.

In some implementations, the HMD 300 may include a camera to capture still and moving images. The images captured by the camera may be used to help track a physical position of the user and/or the HMD 300 in the real world, or physical environment. For example, these images may be used to determine the content of and the location of content in the augmented reality environment generated by the HMD 300.

The HMD 300 may also include a sensing system that includes an inertial measurement unit (IMU), which may be similar to the IMU 124 of FIG. 1. A position and orientation of the HMD 300 may be detected and tracked based on data provided by the sensing system. The detected position and orientation of the HMD 300 may allow the system to detect and track the user's head gaze direction and movement.

In some implementations, the HMD 300 may also include a gaze tracking device to detect and track an eye gaze of the user. The gaze tracking device may include, for example, one or more image sensors positioned to capture images of the user's eyes. These images may be used, for example, to detect and track direction and movement of the user's pupils. In some implementations, the HMD 300 may be configured so that the detected gaze is processed as a user input to be translated into a corresponding interaction in the AR experience.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Some implementations of the HMD 300 also include a handheld electronic device that can communicatively couple (e.g., via a wired or wireless connection) to the HMD 300. The handheld electronic device may allow the user to provide input to the HMD 300. The handheld electronic device may include a housing with a user interface on an outside of the housing that is accessible to the user. The user interface may include a touch sensitive surface that is configured to receive user touch inputs. The user interface may also include other components for manipulation by the user such as, for example, actuation buttons, knobs, joysticks and the like. In some implementations, at least a portion of the user interface may be configured as a touchscreen, with that portion of the user interface being configured to display user interface items to the user, and also to receive touch inputs from the user on the touch sensitive surface.

The HMD 300 can also include other kinds of devices to provide for interaction with a user; for example, feedback provided to the user can be any form of sensory feedback (e.g., visual feedback, auditory feedback, or tactile feedback); and input from the user can be received in any form, including acoustic, speech, or tactile input.

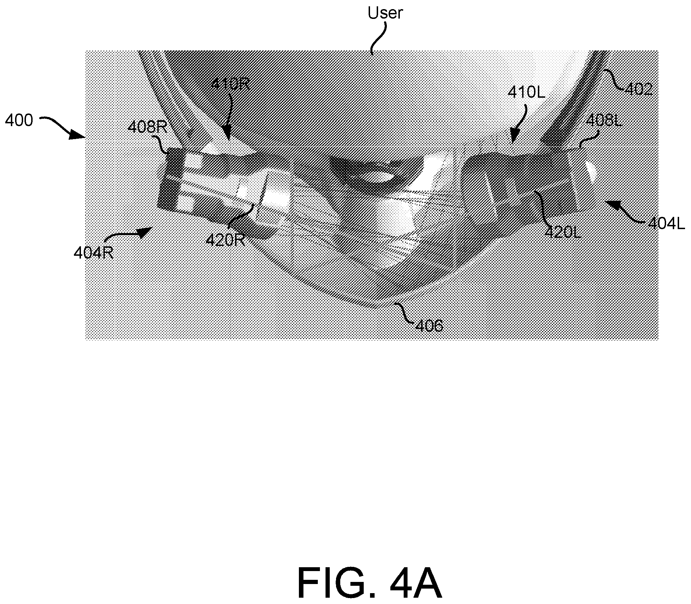

FIG. 4A is a schematic diagram of an example HMD 400. The HMD 400 is an example of the HMD 104. In this example, the HMD 400 includes a frame 402, a left housing 404L, a right housing 404R, and a combiner 406. The frame 402 may be similar to the frame 302, the left housing 404L and the right housing 404R may be similar to the housing 304, the combiner 406 may be similar to the combiner 306.

The housing 404L contains a microdisplay device 408L and a lens assembly 410L. Similarly, the housing 404R contains a microdisplay device 408R and a lens assembly 410R. The microdisplay devices 408L and 408R may be similar to the microdisplay device 308, and the lens assemblies 410L and 410R may be similar to the lens assembly 310. In this example, the microdisplay device 408R emits content 420R as light, which passes through the lens assembly 410R and then crosses the user's face to reflect off of the combiner 406 towards the user's left eye. The content 420R reflects off of the combiner 406 at a position that is approximately in front of the user's left eye. Similarly, the microdisplay device 408L emits light L2 that passes through the lens assembly 410L and the crosses the user's face to reflect off of the combiner 406 toward the user's right eye. The content 420L reflects off of the combiner 406 at a position that is approximately in front of the user's right eye. In this manner, the content emitted on each side of the user's face is ultimately projected onto the field of view of the user's opposite eye. In this example, the housings 404R and 404L do not include fold mirror assemblies as the microdisplay devices 408L and 408R are directed toward the combiner 406.

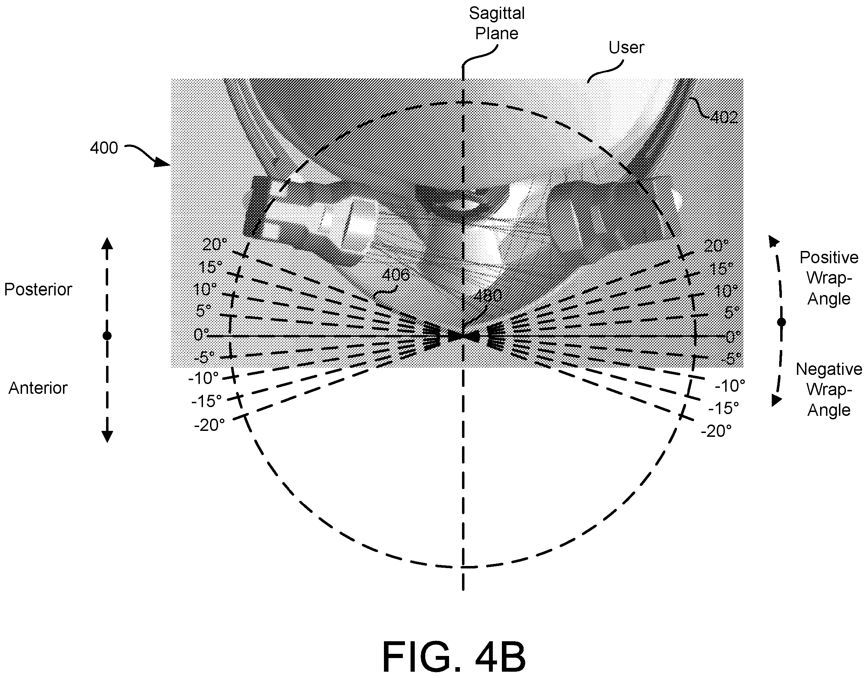

FIG. 4B is a schematic diagram of the example HMD 400 that illustrates a positive wrap angle. A midpoint 480 of the combiner 406 is shown. When the HMD 400 is worn by the user, the midpoint 480 is disposed on the sagittal plane of the user. In this example, the HMD 400 has a positive wrap angle. For example, the combiner 406 is slanted (or curved) from the midpoint 480 in the posterior direction. As shown in this figure, the further the frame curves back toward the posterior direction the greater the positive wrap angle. In this example, the combiner 406 of the HMD has a positive wrap angle of at least 20 degrees. In some implementations, when an HMD with a positive wrap angle is worn, the midpoint 480 is the most anterior point on the combiner 406.

In contrast, an HMD with a negative wrap angle would be angled (or curved) out from the midpoint 480 in the anterior direction (i.e., away from the user's face). An HMD with a negative wrap angle may have a "bug-eyed" appearance.

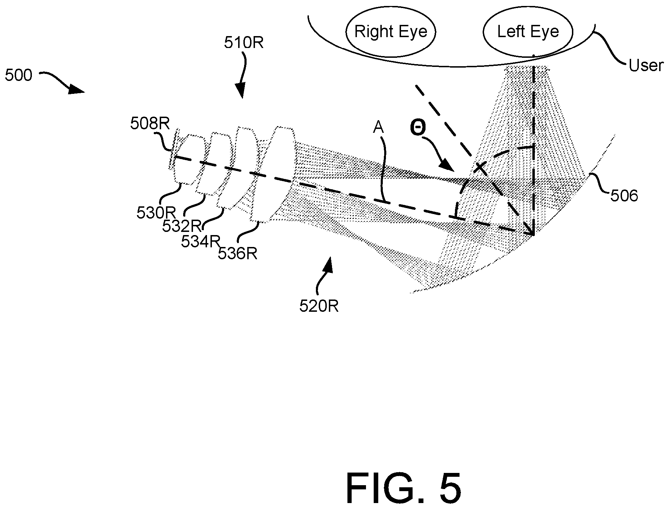

FIG. 5 is a schematic diagram of a portion of an example HMD 500. The HMD 500 is an example of the HMD 104. In this example, the HMD 500 includes a right microdisplay device 508R, a right lens assembly 510R, and a combiner 506. The right microdisplay device 508R may be similar to the microdisplay device 308, the right lens assembly 510R may be similar to the lens assembly 310, and the combiner 506 may be similar to the combiner 306. In this example, the combiner 506 is tilted appropriately to direct the light toward the user's eye and to maintain a positive wrap angle. For example, in some implementations, the combiner 506 is tilted so as to reflect light travelling along the optical axis A by 38.5 degrees with respect to a bisector (as indicated at Θ). As described elsewhere, the combiner 506 may also be tilted in an upward direction by, for example, 12 degrees or approximately 12 degrees to clear eyeglasses worn by the user.

In some implementations, the shape of the combiner 506 can be described using the following equation: $z = \frac{{cr}^{2}}{1 + \sqrt{1 - \left(1+k\right) {c}^{2} {r}^{2}}} + {\sum }_{j = 2}^{66} {C}_{j} {x}^{m} {y}^{n} j = \frac{{\left(m+n\right)}^{2} + m + 3 n}{2} + 1$ and the following coefficients:
X2: -1.2071E-02
XY: 3.4935E-03
Y2: -7.6944E-03
X2Y: 6.3336E-06
Y3: 1.5369E-05
X2Y2: -2.2495E-06
Y4: -1.3737E-07

These equations and coefficients are just examples. Other implementations may include a combiner with a surface defined by different equations and coefficients.

In this example, the right lens assembly 510R includes a first right field lens 530R, a second right field lens 532R, a third right field lens 534R, and a fourth right field lens 536R. In the implementation shown in FIG. 5, the first right field lens 530R, the second right field lens 532R, the third right field lens 534R, and the fourth right field lens 536R are all oriented along the optical axis A.

In this example, the microdisplay device 508R emits content 520R as light, which passes through the lens assembly 510R and then crosses the user's face to reflect off of the combiner 506 towards the user's left eye. As can be seen in the figure, the content 520R is composed of light of different colors (wavelengths). The tilted and off-axis nature of the system may lead to distortion/warping of the content 520R. An off-axis system may, for example, include at least one bend in the optical path of the content 520R. An example of an off-axis system is a system in which not all of the components of the system are along an axis aligned with the target (e.g., the user's eye). An example of an off-axis system includes a system in which the content 520R is refracted. As noted, the content 520R may be warped (e.g., by the content warper 122) prior to emission to counteract this warping by the lens assembly 510R. In various implementations, the field lenses of the lens assembly 510R can be made of various materials. In some implementations, all of the field lenses are made of the same type of material; while in other implementations, at least one of the field lenses is made from a different type of material than the other field lenses.

Although the HMD 500 is shown as including the components to present the content 520R to the user's left eye, some embodiments also include components to present content to the user's right eye. For example, the content 520R emitted on the right side of the user's head and the content emitted on the left side of the user's head may cross one another in front of the user's head.

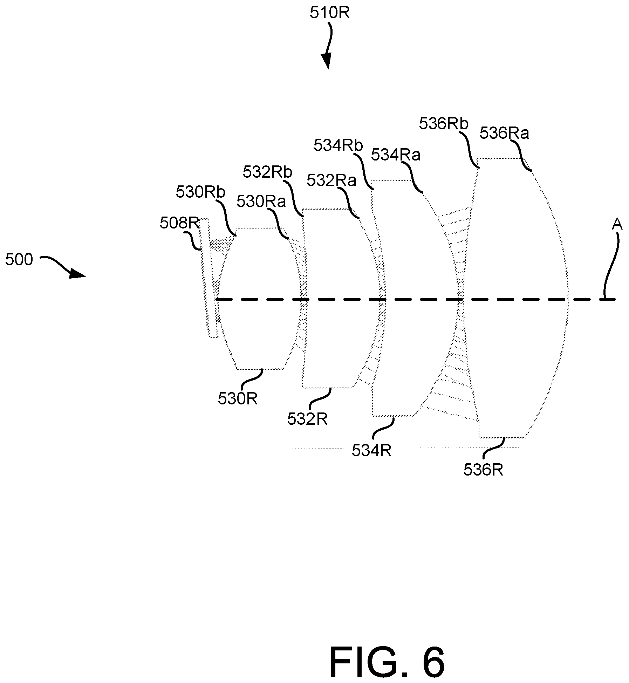

FIG. 6 is another schematic diagram of a portion of the example HMD 500. In some implementations, the field lenses balance (or reduce) astigmatism from the combiner 506 and perform color correction. The lenses may be formed from materials that have different Abbe numbers. For example, the field lenses of the lens assembly 510R may be formed from glass or polymer materials. In some implementations, at least one of the field lenses is formed from a second material having an Abbe number equal to or approximately equal to 23.9, such as a polycarbonate resin, an example of which is available under the brand name Lupizeta^{®} EP-5000 from Mitsubishi Gas Chemical Company, Inc. In some implementations, at least one of the field lenses is formed from a first material having an Abbe number equal to or approximately equal to 56, such as a cyclo olefin polymer (COP) material, an example of which is available under the brand name Zeonex^{®} Z-E48R from Zeon Specialty Materials, Inc. In some implementations, the first right field lens 530R is formed from the first material, and the remaining field lenses 532R, 534R, and 536R are formed from the second material. Alternatively, a single material is used for all of the field lenses in combination with a diffractive optical element to achieve color correction.

The surfaces of the field lenses can have various shapes. In an example implementation, the surfaces of the field lenses are described by the following equations: $z = \frac{{cr}^{2}}{1 + \sqrt{1 - \left(1+k\right) {c}^{2} {r}^{2}}} + {\sum }_{j = 2}^{66} {C}_{j} {x}^{m} {y}^{n} j = \frac{{\left(m+n\right)}^{2} + m + 3 n}{2} + 1$

In some implementations, the first right field lens 530R includes an outgoing surface 530Ra and an incoming surface 530Rb. The outgoing surface 530Ra may be described with the following coefficients:
X2: -4.8329E-02
XY: 1.6751E-04
Y2: -4.4423E-02
X3: -2.6098E-04
The incoming surface 530Rb may be described with the following coefficients:
X2: 5.8448E-02
XY: 5.3381E-03
Y2: 1.0536E-01
X3: -9.8277E-03

In some implementations, the second right field lens 532R includes an outgoing surface 532Ra and an incoming surface 532Rb. The outgoing surface 532Ra may be described with the following coefficients:
X2: -3.5719E-02
XY: -1.1015E-02
Y2: -3.5776E-02
X3: -1.3138E-04
The incoming surface 532Rb may be described with the following coefficients:
X2: 9.1639E-03
XY: 1.2060E-02
XY2: 7.7082E-04

In some implementations, the third right field lens 534R includes an outgoing surface 534Ra and an incoming surface 534Rb. The outgoing surface 534Ra may be described with the following coefficients:
X2: -1.8156E-02
XY: 2.5627E-03
Y2: -1.1823E-02
The incoming surface 534Rb may be described with the following coefficients:
X2: -6.9012E-03
XY: -2.1030E-02
Y2: -1.7461E-02

In some implementations, the fourth right field lens 536R includes an outgoing surface 536Ra and an incoming surface 536Rb. The outgoing surface 536Ra may be described with the following coefficients:
X2: -1.3611E-02
XY: -1.2595E-02
Y2: -2.4800E-02
X3: 7.8846E-05
The incoming surface 536Rb may be described with the following coefficients:
X2: 1.9009E-02
XY: -3.3920E-03
Y2: 2.8645E-02

These equations and coefficients are just examples. Other implementations may include field lenses with surfaces defined by different equations and coefficients.

As noted above, the selection of field lenses formed from materials with different Abbe numbers may be used for color correction. Some implementations also include doublets in the field lenses to perform color correction. Additionally or alternatively, some implementations include a kinoform-type diffractive optical element in at least one of the field lenses. The equation and coefficients provided above are examples. Other implementations may use other equations and other coefficients.

FIG. 7 is a schematic diagram of a portion of an example HMD 700 according to the proposed solution. The HMD 700 is an example of the HMD 104. In this example, the HMD 700 includes a frame 702, right housing 704R, a left housing 704L, and a combiner 706. The frame 702 may be similar to the frame 302, the right housing 704R and the left housing 704L may be similar to the housing 304, and the combiner 706 may be similar to the combiner 306. In this example, the right housing 704R and the left housing 704L are both tilted at an angle relative to the horizontal direction of the user's face, as indicated at angle Φ. In some implementations, the angle Φ is 12 degrees. Other implementations use an angle between 5 and 15 degrees. Other implementations are also possible. This tilt may allow the overlay to clear a user's eyeglasses and therefore allow a user to wear the HMD 700 and glasses at the same time without the glasses occluding emitted visual content from reaching the combiner 706. Some implementations are not configured to support a user wearing eyeglasses while wearing the HMD 700 and do not include this tilt relative to the horizontal direction of the user's face.

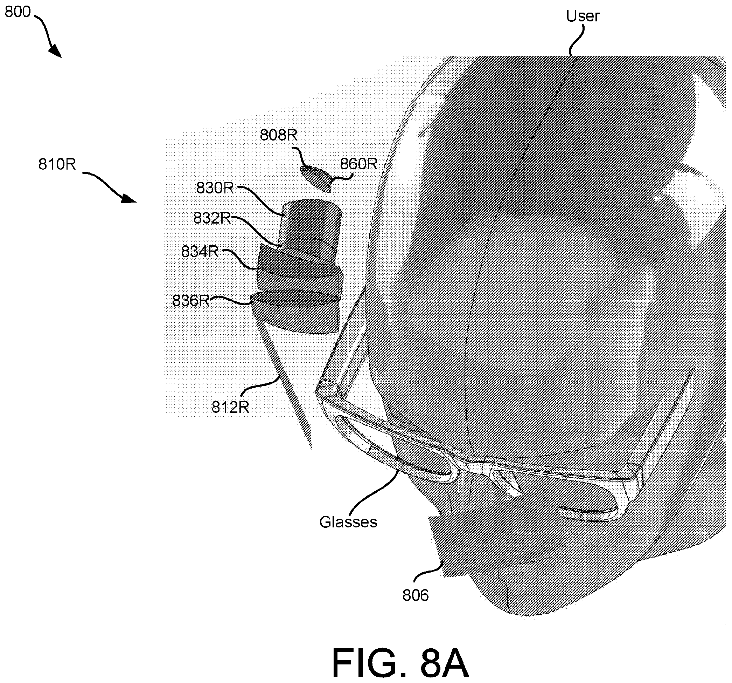

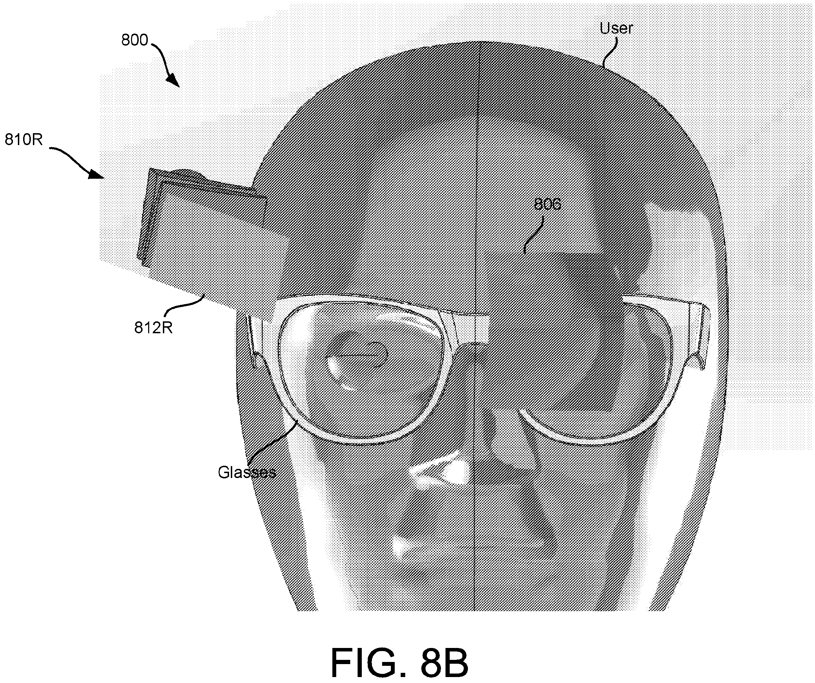

FIGS. 8A and 8B show schematic diagrams of another example implementation of an HMD 800 being worn over glasses by a user. FIG. 8A shows an angled view from above of the HMD 800. FIG. 8B shows a front view of the HMD 800. The HMD 800 is an example of the HMD 104. In this example, the HMD 800 includes a combiner 806, a right microdisplay device 808R, a right prism 860R, a right lens assembly 810R, including right field lenses 830R, 832R, 834R, and 836R, and a right fold mirror assembly 812R. The combiner 806 may be similar to the combiner 306, the right microdisplay device 808R may be similar to the microdisplay device 308, the right lens assembly 810R may be similar to the lens assembly 310, and the right fold mirror assembly 812R may be similar to the fold mirror assembly 312. The right microdisplay device 808R, the right prism 860R, right lens assembly 810R, and right fold mirror assembly 812R are disposed in a right housing that is not shown in this figure. The right housing is disposed on the right side of the user's face and oriented so that content emitted by the microdisplay device 808R is emitted through the right prism 860R and the right lens assembly 810R toward the right fold mirror assembly 812R located in front of the user's face. The right fold mirror assembly 812R then reflects the content to the combiner 806 that is disposed in front of the user's left eye.

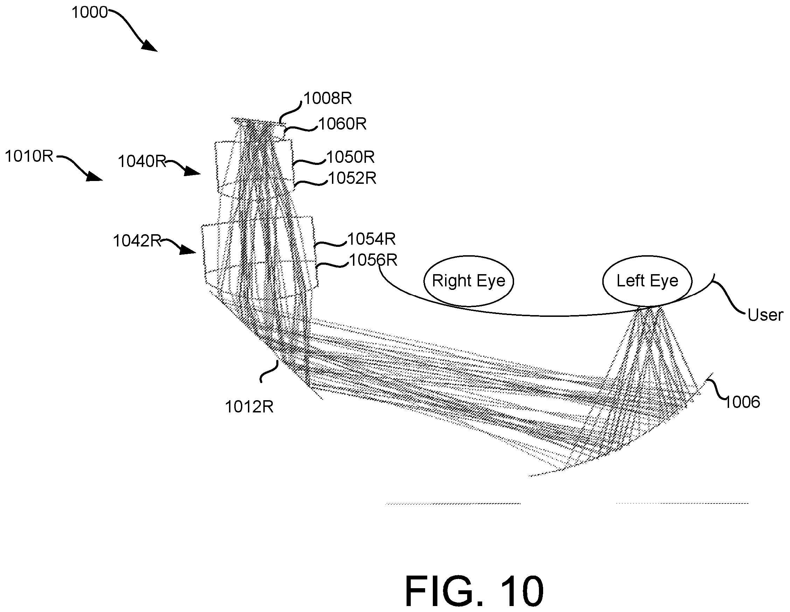

In this example, the right field lenses 830R and 832R are joined to form a doublet. For example, the right field lenses 830R and 832R may be formed from materials having different Abbe numbers. The right prism 860R may, for example, perform color correction and improve telecentricity. Embodiments that include a prism and doublets are illustrated and described elsewhere herein, such as with respect to at least FIG. 10.

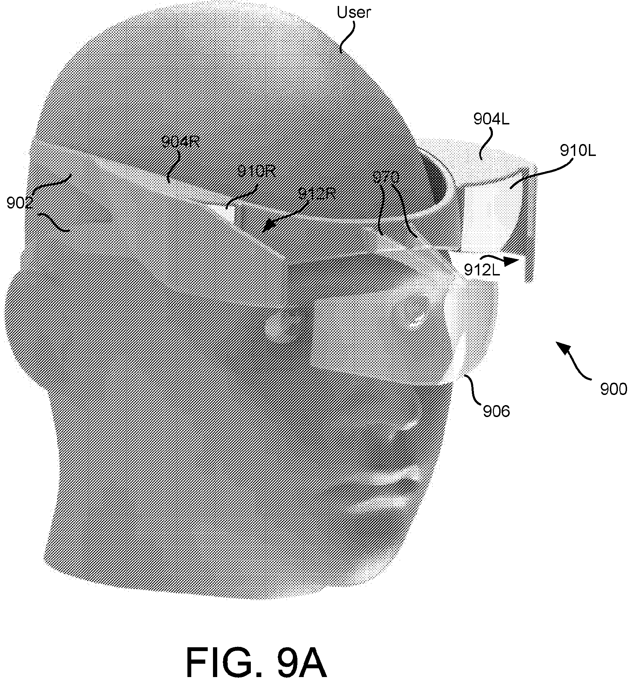

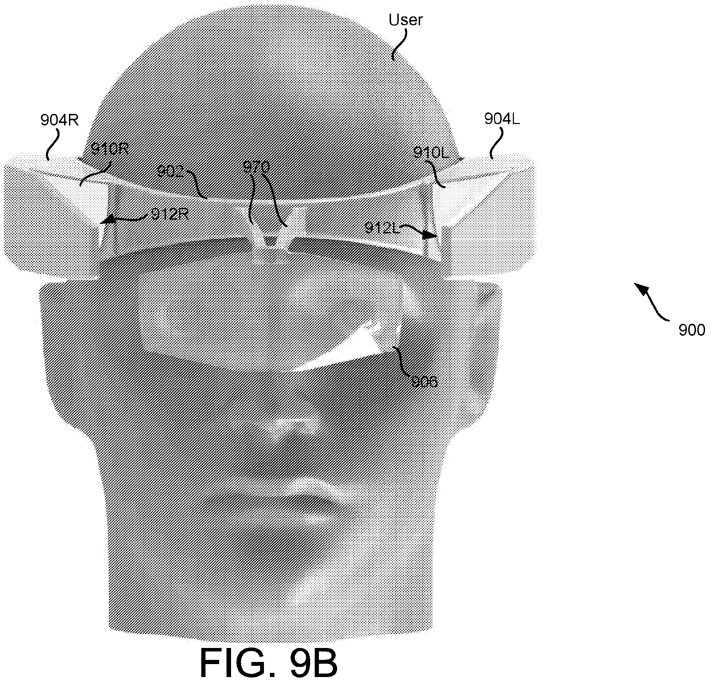

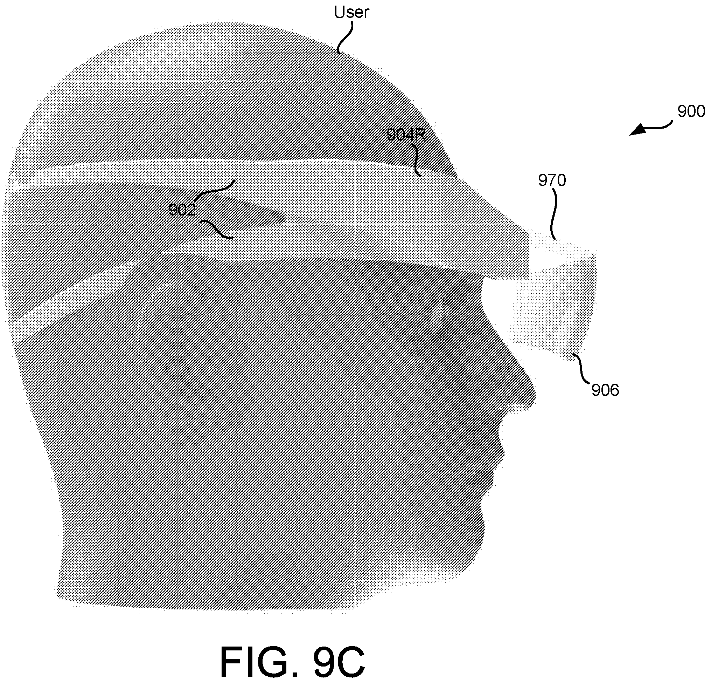

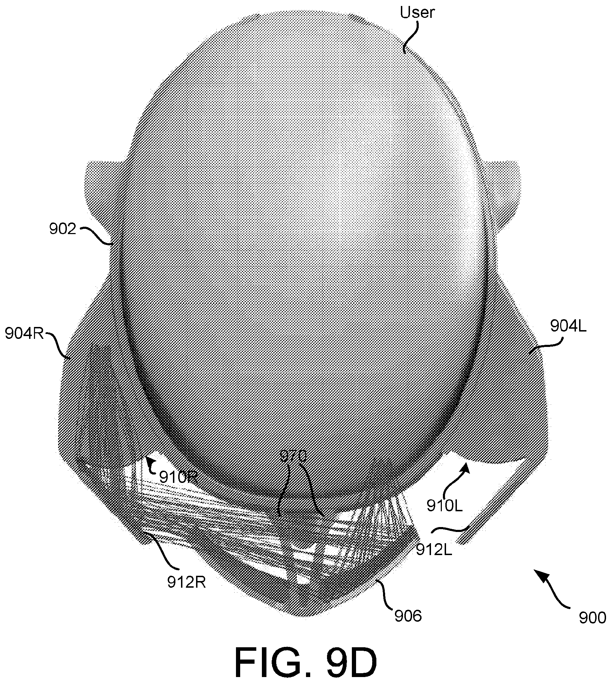

FIGS. 9A-9D show schematic diagrams of another example implementation of an HMD 900 being worn by a user. FIG. 9A shows an angled side view of the HMD 900. FIG. 9B shows a front view of the HMD 900. FIG. 9C shows a side view of the HMD 900. FIG. 9D shows a top view of the HMD 900. The HMD 900 is an example of the HMD 104. In this example, the HMD 900 includes a frame 902, a right housing 904R, a left housing 904L, a combiner 906 that is connected to the frame 902 by an attachment assembly 970, a right fold mirror assembly 912R, and a left fold mirror assembly 912L. The frame 902 may be similar to the frame 302, the combiner 906 may be similar to the combiner 306, the right fold mirror assembly 912R and the left fold mirror assembly 912L may be similar to the fold mirror assembly 312. The right housing 904R may enclose a right microdisplay device (not shown) and a right lens assembly 910R. Similarly, the left housing 904R may enclose a left microdisplay device (not shown) and a left lens assembly 910L. The right lens assembly 910R and the left lens assembly 910L may be similar to the lens assembly 310. In some implementations, the attachment assembly 970 includes one or more horizontally disposed elongate members that extend from the frame 902 out in front of the user's face. A first end of the attachment assembly 970 may be joined to the frame 902, while a second end of the attachment assembly 970 may be joined to the combiner 906. For example, the attachment assembly 970 may position the combiner 906 in front of the user's eyes so as to combine intermediary images generated by the right lens assembly 910R and left lens assembly 910L with the user's view of the physical environment (i.e., the real world).

FIG. 10 is a schematic diagram of a portion of an example HMD 1000. The HMD 1000 is an example of the HMD 104. In this example, the HMD 1000 includes a right microdisplay device 1008R, a right lens assembly 1010R, a combiner 1006, and a right fold mirror assembly 1012R. The right microdisplay device 1008R may be similar to the microdisplay device 308, the combiner 1006 may be similar to the combiner 306, and the right fold mirror assembly 1012R may be similar to the right fold mirror assembly 812R. In this example, the right lens assembly 1010R includes a right prism 1060R, a doublet 1040R, and a doublet 1042R. The right prism 1060R refracts light emitted by the right microdisplay device 1008R. The right prism 1060R may make the right lens assembly 1010R more telecentric. The right prism 1060R may, for example, improve the performance of the HMD 1000 when the right microdisplay device 1008R includes LCOS technology.

The doublets 1040R and 1042R may reduce chromatic aberrations caused by the way the lenses affect light of different wavelengths differently. In some implementations, the doublet 1040R includes a first lens 1050R and a second lens 1052R, and the doublet 1042R includes a third lens 1054R and a fourth lens 1056R. The lenses may be formed from materials that have different Abbe numbers. For example, the first lens 1050R and the third lens 1054R may be formed from a first material that has an Abbe number equal to or approximately equal to 23.9 (e.g., a polycarbonate resin such as Lupizeta^{®} EP-5000 from Mitsubishi Gas Chemical Company, Inc.) and the second lens 1052R and the fourth lens 1056R may be formed from a second material that has an Abbe number equal to or approximately equal to 56 (e.g., a cyclo olefin polymer material such as Zeonex^{®} Z-E48R from Zeon Specialty Materials, Inc.).

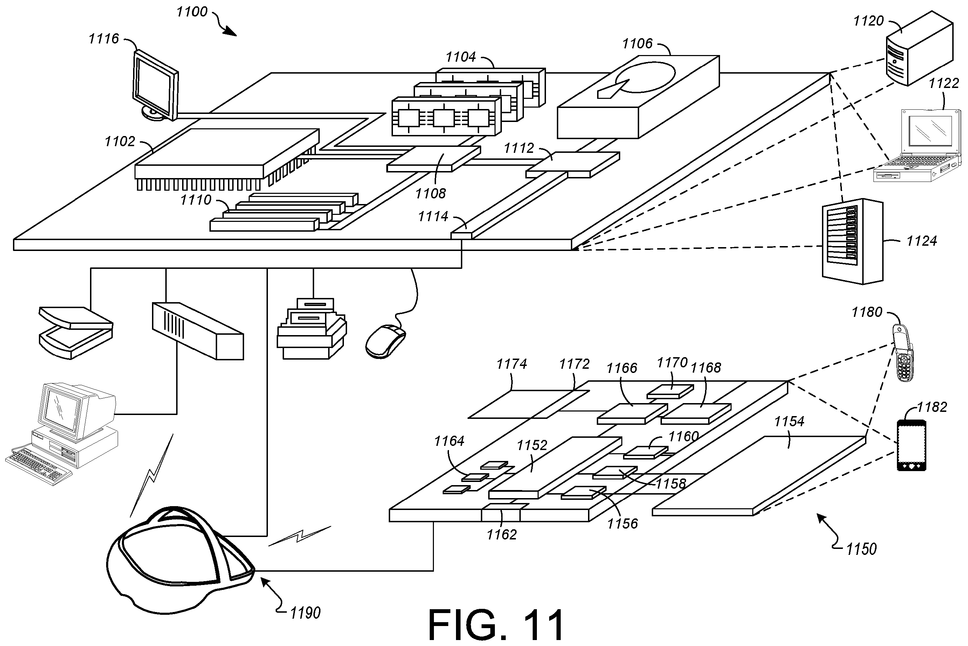

FIG. 11 shows an example of a computing device 1100 and a mobile computing device 1150, which may be used with the techniques described here. The computing device 1100 includes a processor 1102, memory 1104, a storage device 1106, a high-speed interface 1108 connecting to memory 1104 and high-speed expansion ports 1110, and a low speed interface 1112 connecting to low speed bus 1114 and storage device 1106. Each of the components 1102, 1104, 1106, 1108, 1110, and 1112, are interconnected using various busses, and may be mounted on a common motherboard or in other manners as appropriate. The processor 1102 can process instructions for execution within the computing device 1100, including instructions stored in the memory 1104 or on the storage device 1106 to display graphical information for a GUI on an external input/output device, such as display 1116 coupled to high speed interface 1108. In other implementations, multiple processors and/or multiple buses may be used, as appropriate, along with multiple memories and types of memory. Also, multiple computing devices 1100 may be connected, with each device providing portions of the necessary operations (e.g., as a server bank, a group of blade servers, or a multi-processor system).

The memory 1104 stores information within the computing device 1100. In one implementation, the memory 1104 is a volatile memory unit or units. In another implementation, the memory 1104 is a non-volatile memory unit or units. The memory 1104 may also be another form of computer-readable medium, such as a magnetic or optical disk.

The storage device 1106 is capable of providing mass storage for the computing device 1100. In one implementation, the storage device 1106 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 1104, the storage device 1106, or memory on processor 1102.

The high speed controller 1108 manages bandwidth-intensive operations for the computing device 1100, while the low speed controller 1112 manages lower bandwidth-intensive operations. Such allocation of functions is exemplary only. In one implementation, the high-speed controller 1108 is coupled to memory 1104, display 1116 (e.g., through a graphics processor or accelerator), and to high-speed expansion ports 1110, which may accept various expansion cards (not shown). In the implementation, low-speed controller 1112 is coupled to storage device 1106 and low-speed expansion port 1114. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 1100 may be implemented in a number of different forms, as shown in the figure. For example, it may be implemented as a standard server 1120, or multiple times in a group of such servers. It may also be implemented as part of a rack server system 1124. In addition, it may be implemented in a personal computer such as a laptop computer 1122. Alternatively, components from computing device 1100 may be combined with other components in a mobile device (not shown), such as device 1150. Each of such devices may contain one or more of computing device 1100, 1150, and an entire system may be made up of multiple computing devices 1100, 1150 communicating with each other.

Computing device 1120 includes a processor 1152, memory 1164, an input/output device such as a display 1154, a communication interface 1166, and a transceiver 1168, among other components. The device 1150 may also be provided with a storage device, such as a microdrive or other device, to provide additional storage. Each of the components 1150, 1152, 1164, 1154, 1166, and 1168, are interconnected using various buses, and several of the components may be mounted on a common motherboard or in other manners as appropriate.

The processor 1152 can execute instructions within the computing device 1120, including instructions stored in the memory 1164. The processor may be implemented as a chipset of chips that include separate and multiple analog and digital processors. The processor may provide, for example, for coordination of the other components of the device 1150, such as control of user interfaces, applications run by device 1150, and wireless communication by device 1150.

Processor 1152 may communicate with a user through control interface 1158 and display interface 1156 coupled to a display 1154. The display 1154 may be, for example, a TFT LCD (Thin-Film-Transistor Liquid Crystal Display) or an OLED (Organic Light Emitting Diode) display, or other appropriate display technology. The display interface 1156 may comprise appropriate circuitry for driving the display 1154 to present graphical and other information to a user. The control interface 1158 may receive commands from a user and convert them for submission to the processor 1152. In addition, an external interface 1162 may be provide in communication with processor 1152, so as to enable near area communication of device 1150 with other devices. External interface 1162 may provide, for example, for wired communication in some implementations, or for wireless communication in other implementations, and multiple interfaces may also be used.

The memory 1164 stores information within the computing device 1120. The memory 1164 can be implemented as one or more of a computer-readable medium or media, a volatile memory unit or units, or a non-volatile memory unit or units. Expansion memory 1174 may also be provided and connected to device 1150 through expansion interface 1172, which may include, for example, a SIMM (Single In Line Memory Module) card interface. Such expansion memory 1174 may provide extra storage space for device 1150, or may also store applications or other information for device 1150. Specifically, expansion memory 1174 may include instructions to carry out or supplement the processes described above, and may include secure information also. Thus, for example, expansion memory 1174 may be provided as a security module for device 1150, and may be programmed with instructions that permit secure use of device 1150. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 1164, expansion memory 1174, or memory on processor 1152, that may be received, for example, over transceiver 1168 or external interface 1162.

Device 1150 may communicate wirelessly through communication interface 1166, which may include digital signal processing circuitry where necessary. Communication interface 1166 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 1168. In addition, short-range communication may occur, such as using a Bluetooth, Wi-Fi, or other such transceiver (not shown). In addition, GPS (Global Positioning System) receiver module 1170 may provide additional navigation- and location-related wireless data to device 1150, which may be used as appropriate by applications running on device 1150.

Device 1150 may also communicate audibly using audio codec 1160, which may receive spoken information from a user and convert it to usable digital information. Audio codec 1160 may likewise generate audible sound for a user, such as through a speaker, e.g., in a handset of device 1150. Such sound may include sound from voice telephone calls, may include recorded sound (e.g., voice messages, music files, etc.) and may also include sound generated by applications operating on device 1150.

The computing device 1120 may be implemented in a number of different forms, as shown in the figure. For example, it may be implemented as a cellular telephone 1180. It may also be implemented as part of a smart phone 1182, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., an LCD (liquid crystal display) screen, an OLED (organic light emitting diode)) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the computing devices depicted in FIG. 1 can include sensors that interface with an AR headset/HMD device 1190 to generate an AR environment. For example, one or more sensors included on a computing device 1120 or other computing device depicted in FIG. 1, can provide input to AR headset 1190 or in general, provide input to a AR environment. The sensors can include, but are not limited to, a touchscreen, accelerometers, gyroscopes, pressure sensors, biometric sensors, temperature sensors, humidity sensors, and ambient light sensors. The computing device 1120 can use the sensors to determine an absolute position and/or a detected rotation of the computing device in the AR environment that can then be used as input to the AR environment. For example, the computing device 1120 may be incorporated into the AR space as a virtual object, such as a controller, a laser pointer, a keyboard, a weapon, etc. Positioning of the computing device/virtual object by the user when incorporated into the AR environment can allow the user to position the computing device so as to view the virtual object in certain manners in the AR environment. For example, if the virtual object represents a laser pointer, the user can manipulate the computing device as if it were an actual laser pointer. The user can move the computing device left and right, up and down, in a circle, etc., and use the device in a similar fashion to using a laser pointer.

In some implementations, one or more input devices included on, or connect to, the computing device 1120 can be used as input to the AR environment. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 1120 when the computing device is incorporated into the AR environment can cause a particular action to occur in the AR environment.

In some implementations, a touchscreen of the computing device 1120 can be rendered as a touchpad in AR environment. A user can interact with the touchscreen of the computing device 1120. The interactions are rendered, in AR headset 1190 for example, as movements on the rendered touchpad in the AR environment. The rendered movements can control virtual objects in the AR environment.

In some implementations, one or more output devices included on the computing device 1120 can provide output and/or feedback to a user of the AR headset 1190 in the AR environment. The output and feedback can be visual, tactical, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the computing device 1120 may appear as another object in a computer-generated, 3D environment. Interactions by the user with the computing device 1120 (e.g., rotating, shaking, touching a touchscreen, swiping a finger across a touch screen) can be interpreted as interactions with the object in the AR environment. In the example of the laser pointer in an AR environment, the computing device 1120 appears as a virtual laser pointer in the computer-generated, 3D environment. As the user manipulates the computing device 1120, the user in the AR environment sees movement of the laser pointer. The user receives feedback from interactions with the computing device 1120 in the AR environment on the computing device 1120 or on the AR headset 1190.

In some implementations, a computing device 1120 may include a touchscreen. For example, a user can interact with the touchscreen in a particular manner that can mimic what happens on the touchscreen with what happens in the AR environment. For example, a user may use a pinching-type motion to zoom content displayed on the touchscreen. This pinching-type motion on the touchscreen can cause information provided in the AR environment to be zoomed. In another example, the computing device may be rendered as a virtual book in a computer-generated, 3D environment. In the AR environment, the pages of the book can be displayed in the AR environment and the swiping of a finger of the user across the touchscreen can be interpreted as turning/flipping a page of the virtual book. As each page is turned/flipped, in addition to seeing the page contents change, the user may be provided with audio feedback, such as the sound of the turning of a page in a book.

In some implementations, one or more input devices in addition to the computing device (e.g., a mouse, a keyboard) can be rendered in a computer-generated, 3D environment. The rendered input devices (e.g., the rendered mouse, the rendered keyboard) can be used as rendered in the AR environment to control objects in the AR environment.

Computing device 1100 is intended to represent various forms of digital computers and devices, including, but not limited to laptops, desktops, workstations, personal digital assistants, servers, blade servers, mainframes, and other appropriate computers. Computing device 1120 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described in this document.

A number of embodiments have been described. Nevertheless, it will be understood that various modifications may be made without departing from the scope of appended independent claim 1.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of appended independent claim 1.

While certain features of the described implementations have been illustrated as described herein, many modifications, substitutions, changes and equivalents will now occur to those skilled in the art. It should be understood that they have been presented by way of example only, not limitation, and various changes in form and details may be made as long as covered by appended independent claim 1. Any portion of the apparatus and/or methods described herein may be combined in any combination, except mutually exclusive combinations. The implementations described herein can include various combinations and/or sub-combinations of the functions, components and/or features of the different implementations described within the scope of the claims.

## Claims

1. A head-mounted display device (104, 700), comprising:
a frame (702) having a structure that is configured to be worn by a user, the frame including a left arm configured to rest on the user's left ear and a right arm configured to rest on the user's right ear;
a combiner (706) that is attached to the frame and includes a curved transparent structure that has an inner surface and an outer surface, the inner surface being reflective;
a left microdisplay device attached to the frame via a left housing (704L) and configured to emit image content for the user's right eye, the left microdisplay device emitting image content so that the image content crosses in front of the user's face and intersects with the inner surface of the combiner; and
a right microdisplay device attached to the frame via a right housing (704R) and configured to emit image content for the user's left eye, the right microdisplay device emitting image content so that the image content crosses in front of the user's face and intersects with the inner surface of the combiner,
wherein, for allowing a user wearing the head-mounted display device and glasses at the same time without the glasses occluding emitted image content from reaching the combiner, the left and right housings are tilted at an angle relative to the horizontal direction of a user's face.

2. The head-mounted display device of claim 1, wherein, when the frame is worn, the left and right microdisplay devices are configured to each emit image content that crosses a sagittal plane of the user's face before intersecting with the reflective surface of the combiner.

3. The head-mounted display device of claim 1 or 2, further comprising a lens assembly (312, 410L, 410R) disposed along an optical axis between the right or left microdisplay device and the combiner.

4. The head-mounted display device of claim 3, wherein the lens assembly includes a plurality of field lenses oriented along the optical axis.

5. The head-mounted display device of any preceding claim, wherein the combiner has a positive wrap angle.

6. The head-mounted display device of claim 5, wherein the combiner includes an outer surface that is opposite the reflective surface and has a convex curvature.

7. The head-mounted display device of any proceeding claim, further comprising a fold mirror attached to the frame and configured to reflect image content emitted by the left or right microdisplay device toward the combiner.

8. The head-mounted display device of any preceding claim, wherein the angle at which the left and right housings are tilted relative to the horizontal direction of a user's face is between 5 and 15 degrees.

9. The head-mounted display device of claim 8, wherein the angle at which the left and right housings are tilted relative to the horizontal direction of a user's face is 12 degrees.

## Patentansprüche

1. Head-Mounted Display-Vorrichtung (104, 700), umfassend:
ein Gestell (702), das eine Struktur aufweist, die dazu konfiguriert ist, durch einen Benutzer getragen zu werden, wobei das Gestell einen linken Bügel, der dazu konfiguriert ist, auf dem linken Ohr des Benutzers zu ruhen, und einen rechten Bügel beinhaltet, der dazu konfiguriert ist, auf dem rechten Ohr des Benutzers zu ruhen;
einen Kombinierer (706), der an dem Gestell befestigt ist und eine gebogene transparente Struktur beinhaltet, die eine Innenfläche und eine Außenfläche aufweist, wobei die Innenfläche reflektierend ist;
eine linke Mikrodisplayvorrichtung, die über ein linkes Gehäuse (704L) an dem Gestell befestigt ist und dazu konfiguriert ist, Bildinhalte für das rechte Auge des Benutzers zu emittieren, wobei die linke Mikrodisplayvorrichtung Bildinhalte emittiert, so dass die Bildinhalte vor dem Gesicht des Benutzers vorbeiziehen und die Innenfläche des Kombinierers schneiden; und
eine rechte Mikrodisplayvorrichtung, die über ein rechtes Gehäuse (704R) an dem Gestell befestigt ist und dazu konfiguriert ist, Bildinhalte für das linke Auge des Benutzers zu emittieren, wobei die rechte Mikrodisplayvorrichtung Bildinhalte emittiert, so dass die Bildinhalte vor dem Gesicht des Benutzers vorbeiziehen und die Innenfläche des Kombinierers schneiden,
wobei, um es einem Benutzer zu ermöglichen, die Head-Mounted Display-Vorrichtung und eine Brille gleichzeitig zu tragen, ohne dass die Brille die emittierten Bildinhalte daran hindern, den Kombinierer zu erreichen, das linke und das rechte Gehäuse in einem Winkel relativ zu der horizontalen Richtung des Gesichts eines Benutzers geneigt sind.

2. Head-Mounted Display-Vorrichtung nach Anspruch 1, wobei die linke und rechte Mikrodisplayvorrichtung beim Tragen des Gestells dazu konfiguriert sind, jeweils Bildinhalte zu emittieren, die eine Sagittalebene des Gesichts des Benutzers durchqueren, bevor sie mit der reflektierenden Oberfläche des Kombinierers zusammentreffen.

3. Head-Mounted Display-Vorrichtung nach Anspruch 1 oder 2, ferner umfassend eine Linsenbaugruppe (312, 410L, 410R), die entlang einer optischen Achse zwischen der rechten bzw. der linken Mikrodisplayvorrichtung und dem Kombinierer angeordnet ist.

4. Head-Mounted Display-Vorrichtung nach Anspruch 3, wobei die Linsenbaugruppe eine Mehrzahl von Feldlinsen beinhaltet, die entlang der optischen Achse ausgerichtet sind.

5. Head-Mounted Display-Vorrichtung nach einem der vorhergehenden Ansprüche, wobei der Kombinierer einen positiven Umschlingungswinkel aufweist.

6. Head-Mounted Display-Vorrichtung nach Anspruch 5, wobei der Kombinierer eine Außenfläche beinhaltet, die der reflektierenden Oberfläche gegenüberliegt und eine konvexe Krümmung aufweist.

7. Head-Mounted Display-Vorrichtung nach einem der vorhergehenden Ansprüche, ferner umfassend einen an dem Gestell befestigten Klappspiegel, der dazu konfiguriert ist, die in Richtung des Kombinierers durch die linke oder die rechte Mikrodisplayvorrichtung emittierten Bildinhalte zu reflektieren.

8. Head-Mounted Display-Vorrichtung nach einem der vorhergehenden Ansprüche, wobei der Winkel, in welchem das linke und das rechte Gehäuse relativ zu der horizontalen Richtung des Gesichts eines Benutzers geneigt sind, zwischen 5 und 15 Grad beträgt.

9. Head-Mounted Display-Vorrichtung nach Anspruch 8, wobei der Winkel, in welchem das linke und das rechte Gehäuse relativ zu der horizontalen Richtung des Gesichts eines Benutzers geneigt sind, 12 Grad beträgt.

## Revendications

1. Dispositif d'affichage monté sur la tête (104, 700), comprenant :
un cadre (702) ayant une structure configurée pour être portée par un utilisateur, le cadre comportant un bras gauche configuré pour reposer sur l'oreille gauche de l'utilisateur et un bras droit configuré pour reposer sur l'oreille droite de l'utilisateur ;
un combinateur (706) fixé au cadre et comportant une structure transparente incurvée qui a une surface intérieure et une surface extérieure, la surface intérieure étant réfléchissante ;
un dispositif de micro-affichage gauche fixé au cadre via un boîtier gauche (704L) et configuré pour émettre un contenu d'image destiné à l'œil droit de l'utilisateur, le dispositif de micro-affichage gauche émettant un contenu d'image de sorte que le contenu d'image passe devant le visage de l'utilisateur et intersecte la surface intérieure du combinateur ; et
un dispositif de micro-affichage droit fixé au cadre via un boîtier droit (704R) et configuré pour émettre un contenu d'image destiné à l'œil gauche de l'utilisateur, le dispositif de micro-affichage droit émettant un contenu d'image de sorte que le contenu d'image passe devant le visage de l'utilisateur et intersecte la surface intérieure du combinateur,
dans lequel, afin de permettre à un utilisateur portant simultanément le dispositif d'affichage monté sur la tête et des lunettes sans que les lunettes n'empêchent le contenu d'image émis d'atteindre le combinateur, les boîtiers gauche et droit sont inclinés selon un angle par rapport à la direction horizontale du visage de l'utilisateur.

2. Dispositif d'affichage monté sur la tête selon la revendication 1, dans lequel, lorsque le cadre est porté, les dispositifs de micro-affichage gauche et droit sont configurés pour émettre chacun un contenu d'image qui traverse un plan sagittal du visage de l'utilisateur avant d'intersecter la surface réfléchissante du combinateur.

3. Dispositif d'affichage monté sur la tête selon la revendication 1 ou 2, comprenant en outre un ensemble de lentilles (312, 41OL, 41OR) disposé le long d'un axe optique entre le dispositif de micro-affichage droit ou gauche et le combinateur.

4. Dispositif d'affichage monté sur la tête selon la revendication 3, dans lequel l'ensemble de lentilles comporte une pluralité de lentilles de champ orientées le long de l'axe optique.

5. Dispositif d'affichage monté sur la tête selon une quelconque revendication précédente, dans lequel le combinateur a un angle d'enroulement positif.

6. Dispositif d'affichage monté sur la tête selon la revendication 5, dans lequel le combinateur comporte une surface extérieure opposée à la surface réfléchissante et ayant une courbure convexe.

7. Dispositif d'affichage monté sur la tête selon une quelconque revendication précédente, comprenant en outre un miroir repliable fixé au cadre et configuré pour réfléchir le contenu d'image émis par le dispositif de micro-affichage gauche ou droit vers le combinateur.

8. Dispositif d'affichage monté sur la tête selon une quelconque revendication précédente, dans lequel l'angle selon lequel les boîtiers gauche et droit sont inclinés par rapport à la direction horizontale du visage de l'utilisateur est compris entre 5 et 15 degrés.

9. Dispositif d'affichage monté sur la tête selon la revendication 8, dans lequel l'angle selon lequel les boîtiers gauche et droit sont inclinés par rapport à la direction horizontale du visage de l'utilisateur est de 12 degrés.
